# EUROPÄISCHE PATENTANMELDUNG

(11) **EP 3 961 839 A1**
(43) Veröffentlichungstag der Anmeldung: **02.03.2022**
(21) Anmeldenummer: 21186748.6
(22) Anmeldetag: 20.07.2021
(51) Int. Cl.: H02J 1/10, G05F 1/66, H02J 1/12, H02J 3/38, H02J 3/46, H02J 4/00

(54) **VORRICHTUNG UND VERFAHREN ZUR ASYMMETRISCHEN LEISTUNGSABFALLREGELUNG**

(30) Priorität: 11.08.2020 DE 102020121093
(71) Anmelder: BLOCK Transformatoren-Elektronik GmbH, 27283 Verden (DE)
(72) Erfinder: Fräger, Lukas, 28359 Bremen (DE)
(74) Vertreter: Witte, Weller & Partner Patentanwälte mbB

(57) **Zusammenfassung**

Die vorliegende Erfindung betrifft eine Vorrichtung (1) zum Regeln der Ausgangsleistung von mindestens zwei parallel geschalteten Stromversorgungseinheiten (10) zur Stromversorgung einer Last (20). Die Vorrichtung (1) ist ausgestaltet, die Ausgangsleistung einer jeweiligen Stromversorgungseinheit (10) in Abhängigkeit eines Lastparameters der Last und basierend auf einer Leistungscharakteristik (30), welche die Ausgangsleistung der jeweiligen Stromversorgungseinheit (10) in Abhängigkeit des Lastparameters definiert, zu regeln. Hierbei sind die Leistungscharakteristiken (30) der Stromversorgungseinheiten (10) unterschiedlich. Ferner betrifft die vorliegende Erfindung eine entsprechende Schaltungsanordnung (100a, 100a', 100b, 100b') mit mindestens zwei parallel geschalteten Stromversorgungseinheiten (10) zur Stromversorgung einer Last (20) und mit einer solchen Vorrichtung (1). Ferner betrifft die vorliegende Erfindung ein Verfahren zum Regeln der Ausgangsleistung von mindestens zwei parallel geschalteten Stromversorgungseinheiten (10) zur Stromversorgung einer Last (20).

## Beschreibung

Die vorliegende Erfindung betrifft eine Vorrichtung zum Regeln der Ausgangsleistung von mindestens zwei parallel geschalteten Stromversorgungseinheiten zur Stromversorgung einer Last. Ferner betrifft die vorliegende Erfindung eine entsprechende Schaltungsanordnung und ein entsprechendes Verfahren.

Die Stromerzeugung und -einspeisung in entsprechende Netze basiert mehr und mehr auf leistungselektronischen Schaltungen. Derartige leistungselektronische Schaltungen ermöglichen vor allem die Umformung elektrischer Energie in Bezug auf die Spannungsform, die Höhe von Spannung und Strom sowie die Frequenz. Beispiele für derartige leistungselektronische Schaltungen sind die Einspeisung aus Photovoltaik-Wechselrichtern, Windkraftanlagen, Energiespeicherung im Nieder- oder Mittelspannungsnetz oder Einspeiseeinheiten für DC-Netze.

Da die benötigte Leistung für jede Anwendung unterschiedlich ist, ist eine Parallelschaltung mehrerer Komponenten wünschenswert. Durch die Modularität können höhere Stückzahlen der Einzelkomponenten erreicht und die Ausgangsleistung flexibel skaliert werden. So wird die Stromversorgung eines lokalen Netzes typischerweise durch eine Parallelschaltung von mehreren Stromversorgungseinheiten bereitgestellt. Ein solches lokales Netz kann beispielsweise ein 48 V DC-Stromnetz in einer Industrieanlage sein. Durch die Parallelschaltung der Stromversorgungseinheiten kann unter anderem die galvanische Trennung vom Versorgungsstromnetz, eine Änderung in der Frequenz und/oder der Spannung gegenüber dem Versorgungsstromnetz oder Ähnliches erreicht werden.

Zur Parallelschaltung können grundsätzlich zwei Ansätze unterschieden werden: Ein erster Ansatz nutzt auf Kommunikationsbussen basierende Verfahren, bei denen jedes Gerät eine bereitzustellende Leistung vorgegeben bekommt. Ein zweiter Ansatz nutzt Verfahren, bei denen für jedes Gerät auf Grundlage eines oder mehrerer Netzparameter (Spannung und/oder Frequenz) über deren Leistung entschieden wird. Da letztgenannte Verfahren ohne einen zusätzlichen Kommunikationsbus auskommen, werden diese als robuste und einfach zu installierende Verfahren oftmals bevorzugt.

Bei Verfahren zum Parallelschalten mehrerer Stromversorgungseinheiten ist zudem stets eine gleiche Ausgangsleistungscharakteristik für alle parallel geschalteten Geräte erwünscht. Das Ziel ist somit bei allen bisherigen Verfahren, alle Geräte symmetrisch, also mit der gleichen Ausgangsleistung, zu belasten. Aus dem Stand der Technik sind verschiedenartige Erweiterungen zu diesem Standardverfahren bekannt. So ist aus der EP 3 443 652 B1 ein Verfahren zur Verbesserung des Startverhaltens bekannt. Aus der US 9 760 139 B2 ist ein Verfahren zur Kompensation von Messfehlern und zur zusätzlichen Symmetrisierung der Lastaufteilung bekannt, wobei spezielle externe Einheiten zur verbesserten Steuerung verwendet werden können.

Trotz der zahlreich bekannten Erweiterungen haben leistungselektronische Stromversorgungen, bei denen für jede Stromversorgungseinheit auf Grundlage eines oder mehrerer Netzparameter über die entsprechende Leistung entschieden wird, gegenüber konventionellen Einspeisemethoden zwei Nachteile. Die Systemeffizienz der parallelen Anordnung leistungselektronischer Stromversorgungen ist gegenüber den konventionellen Einspeisemethoden in der Regel geringer. Ferner ist die Lebensdauer der einzelnen Stromversorgungseinheiten bei einer leistungselektronischen Stromversorgung verkürzt.

Der vorliegenden Erfindung liegt die Aufgabe zugrunde, die oben genannten Nachteile durch ein verbessertes Regeln der Ausgangsleistung von mindestens zwei parallel geschalteten Stromversorgungseinheiten zur Stromversorgung einer Last zu vermindern. Die vorliegende Erfindung zielt somit insbesondere darauf ab, die geringe Effizienz und die verkürzte Lebensdauer von leistungselektronischen Stromversorgungseinheiten zu verbessern.

Die Aufgabe wird erfindungsgemäß gelöst durch eine Vorrichtung zum Regeln der Ausgangsleistung von mindestens zwei parallel geschalteten Stromversorgungseinheiten zur Stromversorgung einer Last. Die Vorrichtung ist ausgestaltet, die Ausgangsleistung einer jeweiligen Stromversorgungseinheit in Abhängigkeit eines Lastparameters der Last und basierend auf einer Leistungscharakteristik, welche die Ausgangsleistung der jeweiligen Stromversorgungseinheit in Abhängigkeit des Lastparameters definiert, zu regeln. Hierbei sind die Leistungscharakteristiken der Stromversorgungseinheiten unterschiedlich.

Die Aufgabe wird erfindungsgemäß ferner gelöst durch eine Schaltungsanordnung mit mindestens zwei parallel geschalteten Stromversorgungseinheiten zur Stromversorgung einer Last und mit einer Vorrichtung zum Regeln der Ausgangsleistung der mindestens zwei parallel geschalteten Stromversorgungseinheiten.

Die Aufgabe wird erfindungsgemäß ferner gelöst durch ein Verfahren zum Regeln der Ausgangsleistung von mindestens zwei parallel geschalteten Stromversorgungseinheiten zur Stromversorgung einer Last. Das Verfahren ist ausgestaltet, die Ausgangsleistung einer jeweiligen Stromversorgungseinheit in Abhängigkeit eines Lastparameters der Last und basierend auf einer Leistungscharakteristik, welche die Ausgangsleistung der jeweiligen Stromversorgungseinheit in Abhängigkeit des Lastparameters definiert, zu regeln. Die Leistungscharakteristiken der Stromversorgungseinheiten sind hierbei unterschiedlich.

Die vorliegende Erfindung basiert auf der Idee, dass die Ausgangsleistung asymmetrisch auf die mehreren parallel geschalteten Stromversorgungseinheiten zur Stromversorgung einer Last verteilt wird. Dies unterscheidet sich, wie vorab beschrieben, gegenüber konventionellen Standardverfahren zum Parallelschalten mehrerer Stromversorgungseinheiten, bei denen die Leistung möglichst symmetrisch auf alle parallel geschalteten Stromversorgungseinheiten aufgeteilt wird. Ein wesentlicher Nachteil, welcher bei einer symmetrischen Leistungsaufteilung auftritt, ist, dass schon bei sehr geringen Leistungen alle parallel geschalteten Stromversorgungseinheiten aktiv sind. Somit fallen in jeder parallel geschalteten Stromversorgungseinheit die leistungsunabhängigen Verluste an und alle Stromversorgungseinheiten altern dementsprechend durch Schaltvorgänge, durch die anliegenden Spannungen, erhöhte Temperaturen sowie thermische Zyklen der Bauelemente.

Durch die beschriebene asymmetrische Leistungsregelung der Stromversorgungseinheiten kann dieses Problem umgangen oder zumindest verringert werden. Ferner ist die Regelung der Ausgangsleistung einer jeweiligen Stromversorgungseinheit in Abhängigkeit eines Lastparameters bzw. eines Netzparameters des lokalen Netzes mit einem geringen Realisierungsaufwand und einer hohen Zuverlässigkeit verbunden.

Die erfindungsgemäße asymmetrische Regelung der Ausgangsleistung von mindestens zwei parallel geschalteten Stromversorgungseinheiten ist insbesondere für eine abfallende bzw. abnehmende Ausgangsleistung der Stromversorgungseinheiten von Interesse. In diesem Fall beschreiben somit die Leistungscharakteristiken die Ausgangsleistung der Stromversorgungseinheiten, welche für erhöhte Werte des Lastparameters abnimmt.

Die vorliegende Erfindung ermöglicht insbesondere, dass immer nur eine minimal notwendige Anzahl an Stromversorgungseinheiten aktiv ist. Dies ist insbesondere von Interesse, wenn der Parallelschaltkreis der parallel geschalteten Stromversorgungseinheiten aus einer Vielzahl von Stromversorgungseinheiten besteht. Dadurch kann sowohl die Lebensdauer der Stromversorgungseinheiten durch die geringeren durchschnittlichen Betriebszeiten sowie die Effizienz im Teillastbereich verbessert werden.

Als stromversorgende Last kommt jeglicher elektrischer Verbraucher in Betracht. Ferner versteht sich, dass die erfindungsgemäße Regelung der asymmetrischen Ausgangsleistung von mindestens zwei parallel geschalteten Stromversorgungseinheiten ebenso für die Stromversorgung von mehreren Lasten in Betracht kommt.

Der Lastparameter, welcher als entsprechender Eingangsparameter zur Regelung der Ausgangsleistung der parallel geschalteten Stromversorgungseinheiten verwendet wird, ist vorzugsweise eine an der Last anliegende Spannung und/oder, im Fall einer an der Last anliegenden Wechselspannung, eine Frequenz der Wechselspannung. Ein Beispiel hierfür ist ein lokales 48 V DC-Stromnetz in einer Industrieanlage, bei dem eine DC-Spannung von 48 V an den entsprechenden elektrischen Verbrauchern anliegt und diese DC-Spannung von 48 V als entsprechender Lastparameter verwendet wird, um darauf basierend die Ausgangsleistung der mindestens zwei parallel geschalteten Stromversorgungseinheiten zu regeln. Andere Beispiele sind die niedrige DC-Spannung von 12 V oder 24 V von lokalen Netzen im Kleinspannungsbereich oder die übliche AC-Netzspannung von 230 V und die entsprechende Netzfrequenz von 50 Hz als Lastparameter. AC-Netzen können beispielsweise einphasige oder dreiphasige Netze sein. Wie dem Fachmann bekannt ist, ist bei einer Parallelschaltung die elektrische Spannung für alle Teilzweige in der Frequenz, Phasenwinkel und Amplitude identisch, so dass die an der Last anliegende Spannung der an den Stromversorgungseinheiten anliegenden Spannung entspricht.

In einer bevorzugten Ausgestaltung ist vorgesehen, dass die Leistungscharakteristiken der Stromversorgungseinheiten bei Lastparameterwerten oberhalb eines Schwellenwerts des Lastparameters abfallen und die Leistungscharakteristiken der jeweiligen Stromversorgungen sich durch einen unterschiedlichen Schwellenwert voneinander unterscheiden. Da es sich bei dem Lastparameter bevorzugt um eine an der Last anliegende Spannung und/oder, im Fall einer an der Last anliegenden Wechselspannung, um eine Frequenz der Wechselspannung handelt, bedeutet dies, dass die Leistungscharakteristiken der jeweiligen Stromversorgungseinheiten oberhalb eines unterschiedlichen Spannungs- oder Frequenzwerts abfallen. Somit kann die Ausgangsleistung einer ersten Stromversorgungseinheit dementsprechend geregelt werden, dass die Ausgangsleistung bei einer Spannung U₁ abnimmt, während die Ausgangsleistung einer zweiten Stromversorgungseinheit bei einer Spannung U₂, welche größer oder kleiner als die Spannung U₁ ist, abnimmt. Dies bedeutet insbesondere, dass die Ausgangsleistung der unterschiedlichen Stromversorgungen bei hohen Frequenz- oder Spannungswerten unterschiedlich gedrosselt werden.

In einer weiteren Ausgestaltung ist vorgesehen, dass die Leistungscharakteristiken der jeweiligen Stromversorgungen sich durch einen unterschiedlich starken Abfall oberhalb eines Schwellenwerts des Lastparameters voneinander unterscheiden. Somit können die unterschiedlichen Stromversorgungseinheiten durch unterschiedliche Leistungscharakteristiken derart geregelt werden, dass die Leistungscharakteristiken sich nicht nur durch einen unterschiedlichen Schwellenwert des Lastparameters unterscheiden, ab dem die jeweiligen Leistungscharakteristiken abfallen, sondern zusätzlich durch einen unterschiedlich starken Abfall oberhalb dieses Schwellenwerts.

Aus dem Stand der Technik ist bekannt, dass die Verteilung der Ausgangsleistung von zwei oder mehr parallel geschalteten Netzteilen bzw. Stromversorgungseinheiten in Abhängigkeit von Parametern wie der Temperatur der Netzteile geregelt werden kann. Eine entsprechende Offenbarung findet sich beispielsweise in der EP 0 366 940 A2. Bei einer erhöhten Temperatur eines ersten Netzteils gegenüber einem zweiten Netzteil wird hierbei die Ausgangsleistung des ersten Netzteils entsprechend reduziert. Selbiges gilt bei einer Erhöhung der Temperatur des zweiten Netzteils gegenüber dem ersten Netzteil. In diesem Fall wird die Ausgangsleistung des zweiten Netzteils entsprechend reduziert.

Im Gegensatz zur vorliegenden Erfindung wird die Ausgangsleistung des jeweiligen Netzteils allerdings stets durch die gleiche Charakteristik reduziert. Es wird im Stand der Technik somit insbesondere nicht offenbart, dass die Ausgangsleistung von zwei oder mehr unterschiedlichen Netzteilen bzw. Stromversorgungseinheiten durch unterschiedliche Leistungsabfallcharakteristiken geregelt werden können, welche sich durch einen unterschiedlichen Schwellenwert eines Lastparameters oder eines sonstigen Netzparameters, oberhalb dessen die Ausgangsleistung abfällt, sowie einen unterschiedlich starken Abfall oberhalb dieses Schwellenwerts voneinander unterscheiden. Wie bereits oben beschrieben ist, sorgt die erfindungsgemäße asymmetrische Ausgangsleistungsregelung für eine höhere Effizienz und eine längere Lebensdauer der Stromversorgungseinheiten bzw. Netzteile.

In einer weiteren Ausgestaltung ist vorgesehen, dass die Ausgangsleistung der parallel geschalteten Stromversorgungseinheiten durch Leistungscharakteristiken geregelt wird, die bei Lastparameterwerten unterhalb des Schwellenwerts des Lastparameters konstant sind. Dementsprechend ist die Leistungscharakteristik einer ersten Stromversorgungseinheit unterhalb eines ersten Lastparameterwertes U₁ und/oder f₁ konstant, während die Leistungscharakteristik einer zweiten Stromversorgungseinheit unterhalb eines zweiten Schwellenwerts U₂ und/oder F₂ konstant ist, da die Schwellenwerte der jeweiligen Leistungscharakteristiken bevorzugt unterschiedlich sind.

In einer weiteren Ausgestaltung ist vorgesehen, dass die Leistungscharakteristiken der Stromversorgungseinheiten mehrere Schwellenwerte enthalten, zwischen denen die Leistungscharakteristiken unterschiedlich stark abfallen. Dies bedeutet insbesondere, dass die Leistungscharakteristik einer der mehreren Stromversorgungseinheiten unterhalb eines ersten Schwellenwerts U₁ und/oder f₁ konstant ist, oberhalb des ersten Schwellenwerts abnimmt oder konstant ist und weiter oberhalb eines zweiten Schwellenwerts U₂ und/oder f₂ weiter abnimmt. Die Abnahme der Ausgangsleistung oberhalb des zweiten Schwellenwerts unterscheidet sich hierbei vorzugsweise von der Abnahme der Ausgangsleistung zwischen dem ersten und dem zweiten Schwellenwert.

In einer weiteren Ausgestaltung ist vorgesehen, dass die Ausgangsleistung einer jeweiligen Stromversorgungseinheit basierend auf einer oder mehreren vordefinierten Leistungscharakteristiken geregelt wird. Somit kann die Ausgangsleistung einer jeweiligen Stromversorgungseinheit insbesondere auch durch eine Vielzahl von Leistungscharakteristiken geregelt werden. Während des Betriebs hat allerdings jede der parallel geschalteten Stromversorgungseinheiten eine fest definierte Leistungscharakteristik.

Die Leistungscharakteristiken können beispielsweise dadurch vordefiniert sein, dass in jeder Stromversorgungseinheit feste Leistungscharakteristiken einprogrammiert sind. Diese können entweder schon ab Werk vorprogrammiert sein oder beispielsweise über Wahlschalter manuell ausgewählt werden. Dadurch, dass die Ausgangsleistung einer jeweiligen Stromversorgungseinheit auch basierend auf mehreren vordefinierten Leistungscharakteristiken geregelt werden kann, ist es möglich, dass beispielsweise bei einer erhöhten Alterung einer Stromversorgungseinheit die Leistungscharakteristik gewechselt wird, damit die Alterung der jeweiligen Stromversorgungseinheit durch eine geringere Leistungsbelastung der neuen Leistungscharakteristik reduziert wird. Der Wechsel zwischen mehreren vordefinierten Leistungscharakteristiken für eine jeweilige Stromversorgungseinheit ist somit ein adäquates Mittel, um die Lebensdauer als auch die Effizienz der Leistungsabgabe einer jeweiligen Stromversorgungseinheit zu verbessern und kontinuierlich aufrechtzuerhalten.

Somit ist vorgesehen, die mehreren vordefinierten Leistungscharakteristiken basierend auf einem oder mehreren internen Parametern der jeweiligen Stromversorgungseinheit und/oder eines vorgegebenen Zeitzyklus für die Regelung auszuwählen. Die internen Parameter der jeweiligen Stromversorgungseinheit können hierbei die Temperatur, anliegende Spannung, durchschnittliche Belastung und/oder das Alter der jeweiligen Stromversorgungseinheit sein.

Die erfindungsgemäße asymmetrische Leistungsregelung der parallel geschalteten Stromversorgungseinheiten kann dazu führen, dass eine Stromversorgungseinheit eine erhöhte durchschnittliche Belastung oder eine erhöhte Temperatur nach einer gewissen Zeit aufweist. In diesem Fall ist es sinnvoll, die Leistungscharakteristik für diese jeweilige Stromversorgungseinheit derart zu ändern, dass die Ausgangsleistung der jeweiligen Stromversorgungseinheit reduziert wird. In diesem Fall kann die Belastung somit effektiv auf die anderen Stromversorgungseinheiten umgeschichtet werden.

In einer weiteren Ausgestaltung ist vorgesehen, dass die erfindungsgemäße Vorrichtung zum Regeln der Ausgangsleistung von mindestens zwei parallel geschalteten Stromversorgungseinheiten ausgestaltet ist, die mehreren vordefinierten Leistungscharakteristiken einer jeweiligen Stromversorgung basierend auf den internen Parametern der jeweiligen Stromversorgung anzupassen. Somit kann beispielsweise bei einer erhöhten Alterung oder einer erhöhten durchschnittlichen Belastung einer Stromversorgungseinheit die Leistungscharakteristik derart geändert werden, dass bei regelmäßig verwendeten Lastparameterwerten die Ausgangsleistung der jeweiligen Stromversorgungseinheit reduziert wird.

Es ist somit neben dem Wechsel zwischen mehreren vordefinierten Leistungscharakteristiken für eine jeweilige Stromversorgungseinheit auch möglich, dass die vordefinierten Leistungscharakteristiken basierend auf den internen Parametern, wie z.B. Temperatur, anliegender Spannung, durchschnittlicher Belastung und/oder Alter der jeweiligen Stromversorgungseinheit, angepasst werden. Hierfür kann beispielsweise auch ein künstliches Netzwerk verwendet werden, welches die durchschnittlichen Belastungsdaten einer jeweiligen Stromversorgungseinheit analysiert und daraufhin Berechnungen anstellt, die eine Anpassung der vordefinierten Leistungscharakteristiken ermöglichen. Ein solcher zugrunde liegender Algorithmus kann es ermöglichen, die Ausgangsleistung der jeweiligen parallel geschalteten Stromversorgungseinheiten durch kontinuierliche Analyse von Daten effizient zu verbessern, so dass eine vollautomatische effiziente Regelung bereitgestellt wird.

In einer weiteren Ausgestaltung ist vorgesehen, dass die Vorrichtung ferner einen Eingang zum Empfangen von Leistungscharakteristiken und/oder einem oder mehreren äußeren Parametern aufweist. Die Vorrichtung ist sodann ausgestaltet, die Ausgangsleistung einer jeweiligen Stromversorgungseinheit basierend auf einer der empfangenen Leistungscharakteristiken und/oder einem oder mehreren äußeren Parametern zu regeln.

Die äußeren Parameter sind dabei die Anzahl der Stromversorgungseinheiten, Lastdaten, Produktionsdaten und/oder Wetterdaten. So kann die Ausgangsleistung einer jeweiligen Stromversorgungseinheit beispielsweise gedrosselt werden, wenn durch Auswertung von Wetterdaten festgestellt wird, dass die Umgebung der Stromversorgungseinheiten eine erhöhte Temperatur aufweist. Dies ermöglicht es, die Lebenszeiten der Stromversorgungseinheiten zu erhöhen, indem eine zusätzliche Aufheizung der Stromversorgungseinheiten vermieden wird. Eine solche Regelung basierend auf Wetterdaten ist nicht nur für die Temperatur möglich, sondern beispielsweise auch für die Luftfeuchtigkeit. Als Lastdaten sind jegliche Daten des elektrischen Verbrauchers einsetzbar, wie beispielsweise die Temperatur, anliegende Spannung, Stromversorgung oder sonstige Belastungen in Form von unterschiedlichen Parametern.

Der Eingang zum Empfangen der Leistungscharakteristiken und/oder der äußeren Parameter stellt demnach eine Kommunikationsschnittstelle dar, welche auf unterschiedliche Weise realisiert werden kann.

Die Kommunikationsschnittstelle kann beispielsweise eine USB-Schnittstelle, Ethernet-Schnittstelle, IO-Link-Schnittstelle oder CAN-Schnittstelle sein. Hierdurch können beispielsweise Leistungscharakteristiken auch zyklisch zwischen den Stromversorgungseinheiten gewechselt werden. Im einfachsten Fall geschieht ein solches Wechseln nach einem fest vorgegebenen Zeitzyklus. Hierdurch kann der negative Einfluss der asymmetrischen Belastung auf die Lebensdauer einzelner Stromversorgungseinheiten verringert werden, denn durch das zyklische Wechseln wird die mittlere Belastung der parallel geschalteten Stromversorgungseinheiten ausgeglichen.

Bevorzugt kann es zudem sein, dass der Eingang bzw. die Kommunikationsschnittstelle eine drahtlose Kommunikationsschnittstelle ist. Somit kann die Vorrichtung ausgestaltet sein, Leistungscharakteristiken und/oder äußere Parameter über eine drahtlose Kommunikation, wie beispielsweise Bluetooth oder Wi-Fi zu empfangen. In einer solchen Ausgestaltung können zudem in einer Cloud abgespeicherte Parameter oder Leistungscharakteristiken über die drahtlose Kommunikationsschnittstelle von der Vorrichtung empfangen werden, so dass kein lokaler Speicherplatz für die Speicherung von Parameterdaten benötigt wird.

Wie bereits oben beschrieben ist, betrifft die vorliegende Erfindung ferner eine Schaltungsanordnung mit mindestens zwei parallel geschalteten Stromversorgungseinheiten zur Stromversorgung einer Last und mit einer Vorrichtung (Regelungsvorrichtung) zum Regeln der Ausgangsleistung der parallel geschalteten Stromversorgungseinheiten, deren Eigenschaften oben bereits näher erläutert wurden.

Die Ausgangsleistung der parallel geschalteten Stromversorgungseinheiten wird hierbei in Abhängigkeit eines Lastparameters der Last geregelt, wobei es sich bei diesem Lastparameter bevorzugt um eine an der Last anliegende Spannung oder eine Frequenz der Wechselspannung handelt. Somit ist bevorzugt vorgesehen, dass die erfindungsgemäße Schaltungsanordnung ferner eine Spannungsmesseinheit zum Messen einer an der Last anliegenden Spannung und/oder eine Frequenzmesseinheit aufweist. Bei der Frequenzmesseinheit handelt es sich insbesondere um einen Phasenfrequenzdetektor, welcher in der Lage ist, die Phase und Frequenz der an der Last anliegenden Wechselspannung zu bestimmen. Ein solcher Phasenfrequenzdetektor ist in der Lage, aus einer gemessenen Wechselspannung die entsprechende Frequenz zu extrahieren. Dies ist insbesondere deshalb nötig, da eine direkte Messung der Netzfrequenz nicht möglich ist.

In einer Ausgestaltung ist eine Regelungsvorrichtung pro Stromversorgungseinheit vorgesehen, wobei jede Regelungsvorrichtung zum Regeln der Ausgangsleistung der zugeordneten Stromversorgungseinheit ausgestaltet ist. Statt einer gemeinsamen Regelungsvorrichtung für alle Stromversorgungseinheiten weist somit jede Stromversorgungseinheit (oder jede Gruppe von zwei oder mehr Stromversorgungseinheiten) jeweils eine Regelungsvorrichtung auf.

In einer weiteren Ausgestaltung der Schaltungsanordnung ist vorgesehen, dass in jeder parallel geschalteten Stromversorgungseinheit eine oder mehrere vordefinierte Leistungscharakteristiken eingespeichert sind. Diese können insbesondere ab Werk vorprogrammiert sein. Ergänzend hierzu können an jeder parallel geschalteten Stromversorgungseinheit jeweils Mittel, insbesondere Schalter, angebracht sein, um die jeweiligen Leistungscharakteristiken der Stromversorgungseinheiten zu ändern.

Es versteht sich, dass eine bevorzugte Ausführungsform der Erfindung auch jede Kombination der abhängigen Ansprüche mit dem jeweiligen unabhängigen Anspruch sein kann.

Es versteht sich ferner, dass die beanspruchte Vorrichtung, Schaltungsanordnung und das beanspruchte Verfahren ähnliche und/oder identische bevorzugte Ausführungsformen haben, insbesondere wie in den abhängigen Ansprüchen definiert und wie hierin offenbart.

Weitere vorteilhafte Ausführungsformen sind nachstehend definiert.

Die Erfindung wird nachfolgend anhand der Zeichnungen näher erläutert. Es zeigen:
- Fig. 1: eine schematische Darstellung einer aus dem Stand der Technik bekannten Parallelschaltung von mehreren Stromversorgungseinheiten zur Stromversorgung einer oder mehrerer Lasten;
- Fig. 2: ein Leistungsdiagram von fünf parallel geschalteten Stromversorgungseinheiten, welche, wie in Fig. 1 gezeigt ist, parallel angeordnet sind;
- Fig. 3: eine schematische Darstellung einer erfindungsgemäßen DC-Schaltungsanordnung mit zwei parallel geschalteten Stromversorgungseinheiten zur Stromversorgung einer Last und mit einer Vorrichtung gemäß der vorliegenden Erfindung;
- Fig. 4: eine schematische Darstellung einer erfindungsgemäßen AC-Schaltungsanordnung mit zwei parallel geschalteten Stromversorgungseinheiten zur Stromversorgung einer Last und mit einer Vorrichtung gemäß der vorliegenden Erfindung;
- Fig. 5: eine schematische Darstellung einer weiteren erfindungsgemäßen DC-Schaltungsanordnung mit zwei parallel geschalteten Stromversorgungseinheiten zur Stromversorgung einer Last und mit einer Vorrichtung gemäß der vorliegenden Erfindung pro Stromversorgungseinheit;
- Fig. 6: eine schematische Darstellung einer weiteren erfindungsgemäßen AC-Schaltungsanordnung mit zwei parallel geschalteten Stromversorgungseinheiten zur Stromversorgung einer Last und mit einer Vorrichtung gemäß der vorliegenden Erfindung pro Stromversorgungseinheit;
- Fig. 7: ein Leistungsdiagram von fünf parallel geschalteten Stromversorgungseinheiten, welche in einer erfindungsgemäßen Schaltungsanordnung angeordnet sind;
- Fig. 8: ein Effizienzdiagram zum Vergleich der Effizienz einer erfindungsgemäßen Schaltungsanordnung mit einer aus dem Stand der Technik bekannten Schaltungsanordnung;
- Fig. 9: ein weiteres Leistungsdiagram von fünf parallel geschalteten Stromversorgungseinheiten, welche in einer erfindungsgemäßen Schaltungsanordnung angeordnet sind;
- Fig. 10: ein weiteres Leistungsdiagram von fünf parallel geschalteten Stromversorgungseinheiten, welche in einer erfindungsgemäßen Schaltungsanordnung angeordnet sind;
- Fig. 11: ein weiteres Leistungsdiagram von fünf parallel geschalteten Stromversorgungseinheiten, welche in einer erfindungsgemäßen Schaltungsanordnung angeordnet sind; und
- Fig. 12: schematische Darstellungen weiterer erfindungsgemäßer DC-Schaltungsanordnungen.

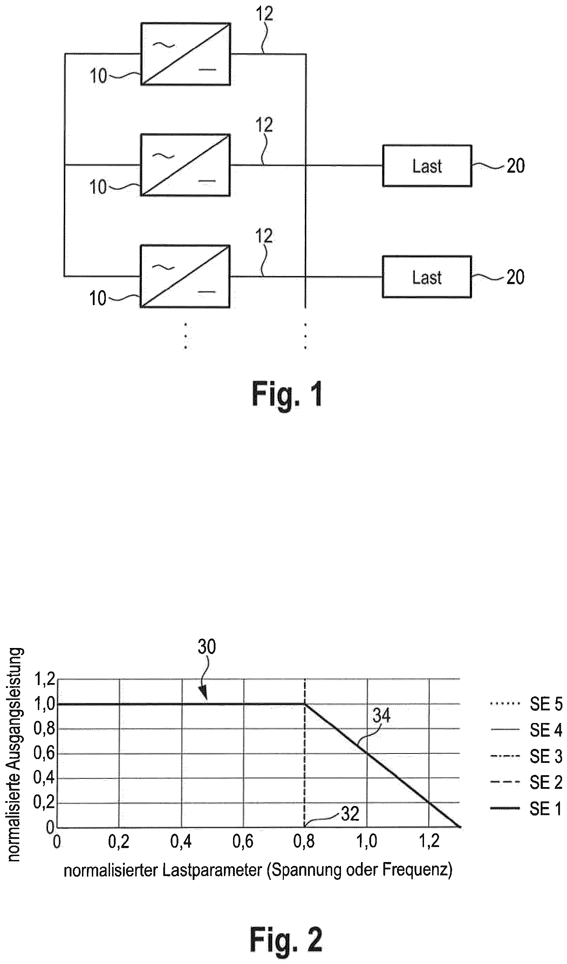

Fig. 1 zeigt eine schematische Darstellung einer aus dem Stand der Technik bekannten Parallelschaltung von mehreren Stromversorgungseinheiten 10 zur Stromversorgung einer oder mehrerer Lasten 20. Durch die parallelen Zweige 12 entsteht eine Parallelschaltung, wobei beispielhaft in Fig. 1 drei oder mehr Stromversorgungseinheiten 10 zur Bereitstellung eines lokalen Netzes in den parallelen Zweigen 12 angeordnet sind. Durch die parallel geschalteten Stromversorgungseinheiten 10 werden zwei oder mehrere Lasten 20, welche elektrische Verbraucher sind, mit elektrischer Energie aus dem lokalen Netz versorgt. Bei den Stromversorgungseinheiten 10 kann es sich sowohl um AC- als auch um DC-Strom- oder Spannungsquellen handeln. Beispielhaft kann es sich um konventionelle AC- oder DC-Netzteile handeln.

In einer konventionellen Parallelschaltung, wie sie in Fig. 1 beispielhaft gezeigt ist, wird die Leistung möglichst symmetrisch auf alle parallel geschalteten Versorgungseinheiten 10 verteilt, was vorzugsweise durch eine oder mehrere Regelungsvorrichtungen geschieht (nicht in Fig. 1 gezeigt). Dies hat den Nachteil, dass schon bei sehr geringen Systemleistungen alle parallel geschalteten Stromversorgungseinheiten 10 aktiv sind. Es fallen also in jeder Stromversorgungseinheit 10 die leistungsunabhängigen Verluste an und alle Stromversorgungseinheiten 10 altern durch Schaltvorgänge, anliegende Spannungen, erhöhte Temperaturen sowie thermische Zyklen der Bauelemente. Diese symmetrische Leistungsverteilung wird durch folgende Fig. 2 ersichtlich.

Fig. 2 zeigt ein Leistungsdiagramm von fünf parallel geschalteten Stromversorgungseinheiten 10, welche, wie in Fig. 1 gezeigt ist, parallel angeordnet sind. Das Diagramm zeigt für die fünf parallel geschalteten Stromversorgungseinheiten (SE 1-5) deren normalisierte Ausgangsleistung in Abhängigkeit eines normalisierten Lastparameters. Bei der Ausgangsleistung handelt es sich um die Leistung, die eine jeweilige Stromversorgungseinheit einer oder mehreren Lasten 20 bereitstellt. Bei dem Lastparameter handelt es sich um eine an der jeweiligen Last 20 anliegende Spannung oder, im Fall einer an der jeweiligen Last 20 anliegenden Wechselspannung, um eine Frequenz der Wechselspannung.

Die Regelung der Ausgangsleistung einer jeweiligen Stromversorgungseinheit in Abhängigkeit des Lastparameters (Spannung oder Frequenz) wird in Fig. 2 durch eine Leistungscharakteristik 30 beschrieben, welche die Ausgangsleistung der jeweiligen Stromversorgungseinheit in Abhängigkeit des Lastparameters definiert. Bei niedrigen Frequenzen oder niedrigen Spannungen des lokalen Netzes sind die Ausgangsleistungen der Stromversorgungseinheiten konstant. Ab einem gewissen Schwellenwert 32 des Lastparameters, d.h. eines Spannungsschwellenwerts oder eines Frequenzschwellenwerts, nehmen die Leistungscharakteristiken 30 der Stromversorgungseinheiten mit einem gleichen Leistungsabfall 34 ab. Das aus dem Stand der Technik bekannte Standardverfahren zum Parallelschalten mehrerer Stromversorgungseinheiten umfasst somit eine gleiche Leistungsabfallcharakteristik für alle parallel geschalteten Stromversorgungseinheiten. Dies sorgt für eine geringere Effizienz und eine geringere Lebensdauer der parallel geschalteten Stromversorgungseinheiten.

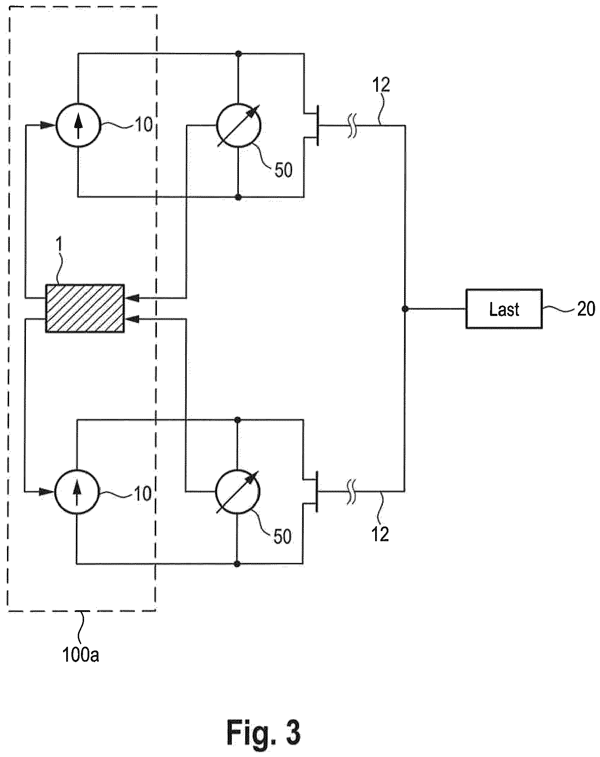

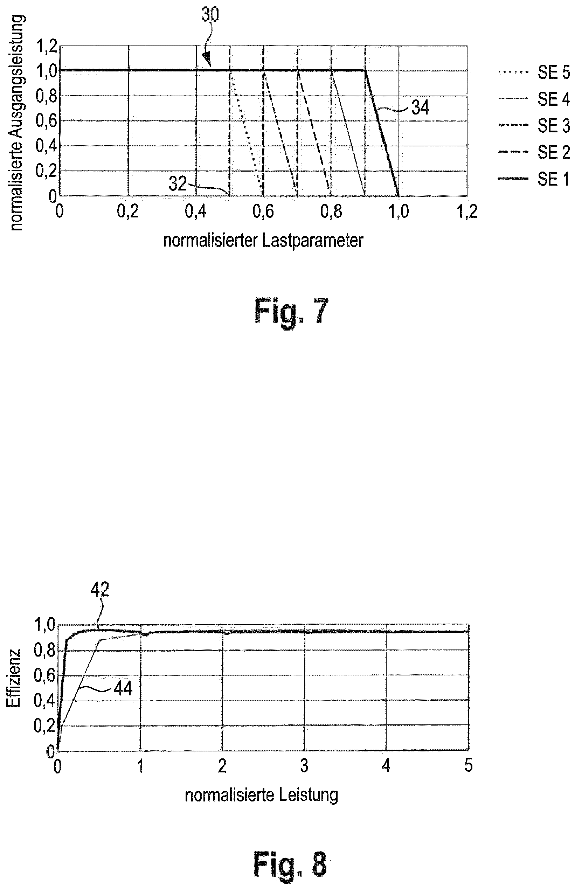

Fig. 3 zeigt eine schematische Darstellung einer erfindungsgemäßen DC-Schaltungsanordnung 100a mit zwei parallel geschalteten Stromversorgungseinheiten 10 zur Stromversorgung einer Last 20 und mit einer Vorrichtung 1 gemäß der vorliegenden Erfindung. Die Vorrichtung 1, die auch als Regelungsvorrichtung bezeichnet wird, ist geeignet zum Regeln der Ausgangsleistung von mindestens zwei parallel geschalteten Stromversorgungseinheiten 10 zur Stromversorgung mindestens einer Last 20. Beispielhaft sind in Fig. 3 zwei parallel geschaltete DC-Stromversorgungseinheiten 10 gezeigt, welche in parallelen Zweigen 12 angeordnet sind. Die gezeigte Parallelschaltung weist zudem Spannungsmesseinheiten 50 auf, damit die DC-Ausgangsspannung der DC-Stromversorgungseinheiten 10 jeweils bestimmt werden kann. Diese gemessenen Spannungswerte werden an die Vorrichtung 1 zum Regeln der Ausgangsleistung der parallel geschalteten Stromversorgungseinheiten 10 übergeben. Die Vorrichtung 1 ist ausgestaltet, die Ausgangsleistung der parallel geschalteten Stromversorgungseinheiten 10 in Abhängigkeit der an der Last anliegenden DC-Spannung zu regeln. Es handelt sich somit um einen Regelkreis, bei dem die Ausgangsleistung der parallel geschalteten Stromversorgungseinheiten 10 kontinuierlich in Abhängigkeit des Lastparameters geregelt wird. Nähere Einzelheiten zu der Art und Weise, wie die Vorrichtung 1 die Ausgangsleistungen der Stromversorgungseinheiten 10 regelt, werden weiter unten in Bezug auf Fig. 7 ff. erläutert. Es versteht sich, dass die Ausgangsleistung der Stromversorgungseinheiten 10 alternativ oder optional auch in Abhängigkeit anderer Netzparameter des lokalen Netzes geregelt werden kann.

An dieser Stelle sei erwähnt, dass unter einer Stromversorgungseinheit im Sinne der vorliegenden Erfindung unterschiedliche Einheiten verstanden werden können, wie beispielsweise ein (insbesondere gesteuerter) Gleichrichter, eine Batterie, eine Photovoltaikanlagen (PV), ein Akkumulator, eine USV, etc. Ferner sei erwähnt, dass in Ausgestaltungen der vorliegenden Erfindung der Leistungsfluss zwischen Netz und Stromversorgungseinheit nicht nur positiv, sondern grundsätzlich auch negativ sein kann, d.h. es kann auch eine Rückspeisung erfolgen.

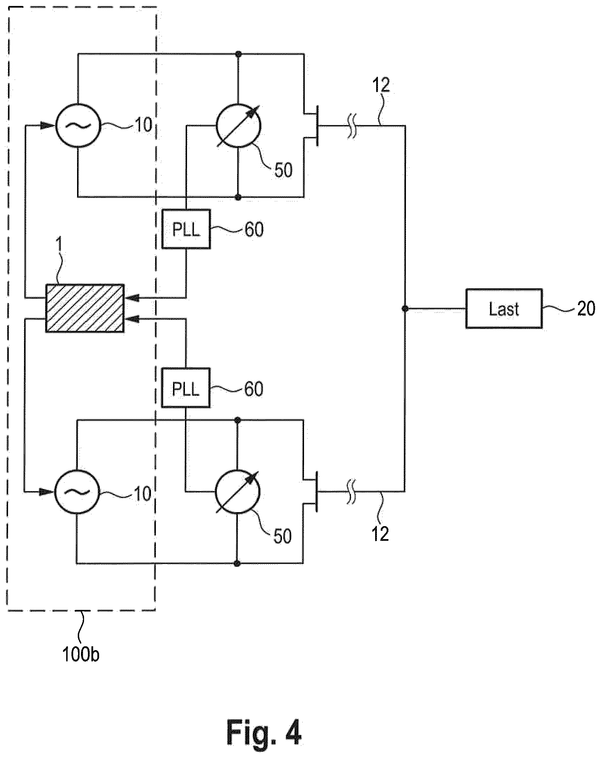

Fig. 4 zeigt eine schematische Darstellung einer erfindungsgemäßen AC-Schaltungsanordnung 100b mit zwei parallel geschalteten Stromversorgungseinheiten 10 zur Stromversorgung einer Last 20 und mit einer Vorrichtung 1 gemäß der vorliegenden Erfindung. Im Gegensatz zu Fig. 3, handelt es sich nun bei den Stromversorgungseinheiten 10 nicht um DC-Quellen, sondern um AC-Quellen. Somit wird die Last 20 mit einer Wechselspannung versorgt. Im Gegensatz zu der in Fig. 3 gezeigten DC-Schaltungsanordnung 100a, weist die in Fig. 4 gezeigte AC-Schaltungsanordnung 100b ferner Frequenzmesseinheiten 60 auf. Da die Frequenz nicht direkt messbar ist, wird sie vorzugsweise mit Hilfe eines Phasenfrequenzdetektors (PLL) aus der Wechselspannung extrahiert, welche zuvor mit der Spannungsmesseinheit 50 bestimmt wird. Bei einem AC-Netz kann es sich bei dem Lastparameter demnach um die gemessene AC-Spannung und/oder die indirekt bestimmte Frequenz der Wechselspannung handeln.

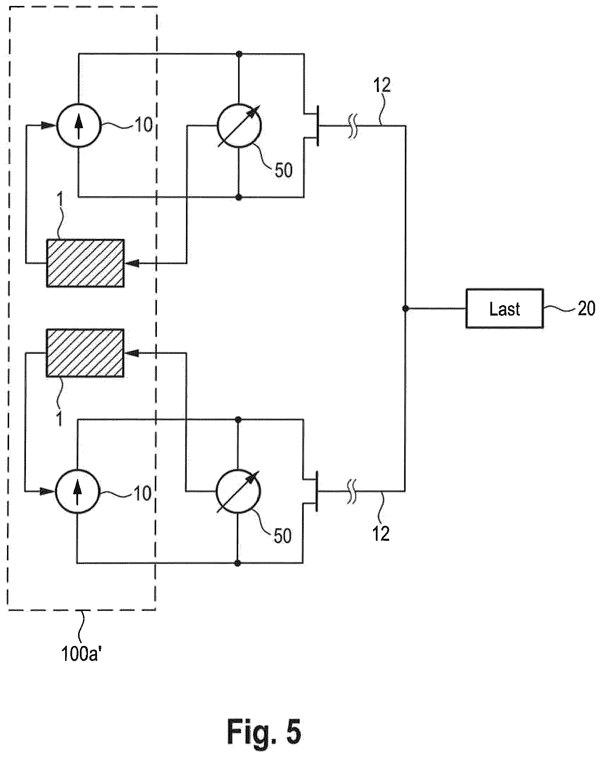

Fig. 5 zeigt eine schematische Darstellung einer weiteren erfindungsgemäßen DC-Schaltungsanordnung 100a' mit zwei parallel geschalteten Stromversorgungseinheiten 10 zur Stromversorgung einer Last 20 und mit einer Vorrichtung 1 gemäß der vorliegenden Erfindung pro Stromversorgungseinheit 10. Im Unterschied zu der in Fig. 3 gezeigten erfindungsgemäßen DC-Schaltungsanordnung, kann, wie in Fig. 5 zu sehen ist, erfindungsgemäß vorgesehen sein, dass pro Stromversorgungseinheit 10 eine Vorrichtung 1 zum Regeln der Ausgangsleistung der jeweiligen Stromversorgungseinheit 10 ausgestaltet ist. Dies ist insbesondere dann der Fall, wenn die Ausgangsleistung einer jeweiligen Stromversorgungseinheit 10 basierend auf einer oder mehreren vordefinierten Leistungscharakteristiken 30 geregelt wird. In diesem Fall ist eine gemeinsame Vorrichtung 1 zum Regeln der Ausgangsleistung der parallel geschalteten Stromversorgungseinheiten nicht nötig, da die Ausgangsleistung einer Stromversorgungseinheit 10 unabhängig von der Ausgangsleistung der anderen Stromversorgungseinheit 10 geregelt wird.

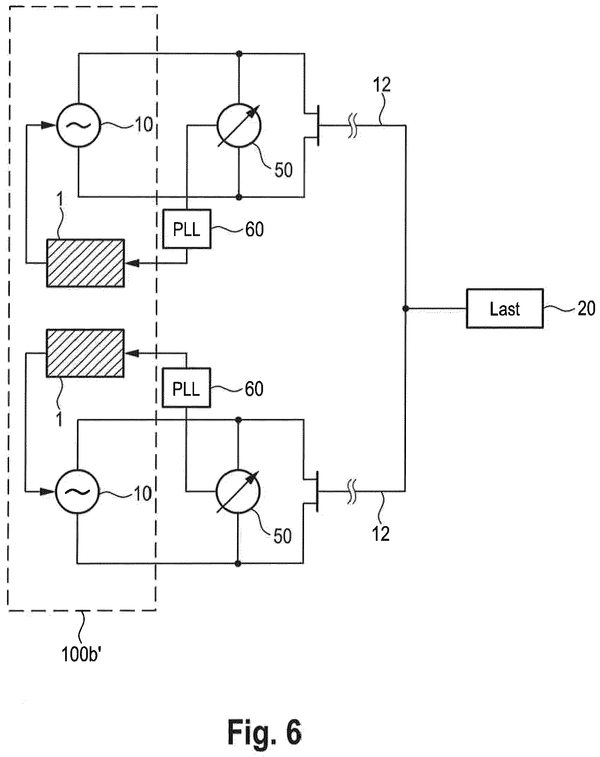

Fig. 6 zeigt eine schematische Darstellung einer weiteren erfindungsgemäßen AC-Schaltungsanordnung 100b' mit zwei parallel geschalteten Stromversorgungseinheiten 10 zur Stromversorgung einer Last 20 und mit einer Vorrichtung 1 gemäß der vorliegenden Erfindung pro Stromversorgungseinheit 10. Im Gegensatz zu der in Fig. 5 gezeigten DC-Schaltungsanordnung 100a', weist die in Fig. 6 gezeigte AC-Schaltungsanordnung 100b' ferner Frequenzmesseinheiten 60 auf, um die Frequenz der von Stromversorgungseinheiten 10 ausgegebenen Wechselspannung zu bestimmen, um die Ausgangsleistung der Stromversorgungseinheiten 10 in Abhängigkeit der Frequenz der Wechselspannung zu regeln.

In weiteren Ausgestaltungen der in den Figuren 5 und 6 gezeigten Schaltungsanordnungen kann eine Kommunikation zwischen den Regelungsvorrichtungen 1 vorgesehen sein, beispielsweise mittels einer Kommunikationsleitung zwischen den Regelungsvorrichtungen 1 oder mittels drahtloser Kommunikation, damit die Regelungsvorrichtungen 1 ggf. ihr aktuelles Regelungsverhalten miteinander abstimmen können.

Fig. 7 zeigt ein Leistungsdiagramm von fünf parallel geschalteten Stromversorgungseinheiten, welche in einer erfindungsgemäßen Schaltungsanordnung angeordnet sind, wie es beispielsweise in den Figuren 3 bis 6 gezeigt ist. Das Diagramm zeigt die normalisierte Ausgangsleistung der fünf parallel geschalteten Stromversorgungseinheiten in Abhängigkeit eines normalisierten Lastparameters. Wie in den Figuren 3 bis 6 zu sehen ist, kann es sich bei dem Lastparameter um eine von der jeweiligen Stromversorgungseinheit ausgegebene Spannung und/oder, im Fall einer an der Last anliegenden Wechselspannung, um eine Frequenz der Wechselspannung handeln. Es sei angemerkt, dass die erfindungsgemäße Vorrichtung 1 die Ausgangsleistungen der parallel geschalteten Stromversorgungseinheiten sowohl in Abhängigkeit einer Spannung als auch in Abhängigkeit der Frequenz des AC-Netzes regeln kann. Die Ausgangsleistung der Stromversorgungseinheiten kann demnach basierend auf mehreren Lastparametern gleichzeitig geregelt werden.

Wie in Fig. 7 zu sehen ist, wird die Ausgangsleistung einer jeweiligen Stromversorgungseinheit in Abhängigkeit des Lastparameters durch eine Leistungscharakteristik 30 beschrieben. Fünf verschiedene Leistungscharakteristiken für die fünf parallel geschalteten Stromversorgungseinheiten (SE 1-5) sind in Fig. 7 gezeigt. Im Unterschied zu dem Standardverfahren zum Parallelschalten mehrerer Stromversorgungseinheiten, bei dem für alle parallel geschalteten Stromversorgungseinheiten eine gleiche Leistungscharakteristik verwendet wird (vgl. Fig. 2), werden bei der vorliegenden Erfindung die Ausgangsleistungen der Stromversorgungseinheiten asymmetrisch geregelt. Dies bedeutet, dass die Leistungscharakteristiken 30 der parallel geschalteten Stromversorgungseinheiten unterschiedlich sind.

Wie in Fig. 7 ferner zu sehen ist, werden die Leistungscharakteristiken 30 der Stromversorgungseinheiten bevorzugt dadurch charakterisiert, dass diese bei Lastparameterwerten (Spannungswerten und/oder Frequenzwerten) oberhalb eines Schwellenwerts 32 (Spannungsschwellenwert und/oder Frequenzschwellenwert) des Lastparameters abfallen und die Leistungscharakteristiken 30 der jeweiligen Stromversorgungseinheiten sich durch einen unterschiedlichen Schwellenwert 32 voneinander unterscheiden. Diese unterschiedlichen Schwellenwerte 32 des Lastparameters sind in Fig. 7 durch die vertikal gestrichelten Linien gekennzeichnet. Durch die asymmetrische Leistungsregelung werden verschiedene Stromversorgungseinheiten bei gleichen Netzparametern bzw. Lastparametern unterschiedlich stark (asymmetrisch) belastet. Das Systemverhalten kann dabei gleich sein zu dem Systemverhalten bei gleichen Leistungscharakteristiken, so dass die asymmetrische Leistungsregelung einfach integrierbar ist mit Komponenten, die nur eine symmetrische Leistungsregelung unterstützen.

Fig. 8 zeigt ein Effizienzdiagramm zum Vergleich der Effizienz einer erfindungsgemäßen Schaltungsanordnung mit einer aus dem Stand der Technik bekannten Schaltungsanordnung. Das Diagramm zeigt die Effizienz der jeweiligen Schaltungsanordnungen in Abhängigkeit einer normalisierten Leistung, welche die Leistung des Gesamtsystems in Relation zu der Leistung einer einzelnen Stromversorgungseinheit setzt.

Ein erster Effizienzverlauf 42 zeigt die Effizienz der erfindungsgemäßen Schaltungsanordnung, während ein zweiter Effizienzverlauf 44 die Effizienz einer aus dem Stand der Technik bekannten Schaltungsanordnung zeigt. Es ist deutlich erkennbar, dass die erfindungsgemäße Schaltungsanordnung insbesondere bei geringen normalisierten Leistungswerten (0-1) eine deutlich höhere Effizienz als die konventionelle Schaltungsanordnung aufweist. Die asymmetrische Leistungsregelung ist somit in der Lage, die Effizienz des Gesamtsystems wesentlich zu erhöhen. Zudem wird die Lebensdauer der einzelnen Stromversorgungseinheiten dadurch erhöht, dass die unterschiedlichen Stromversorgungseinheiten bei einem gleichen Lastparameter unterschiedlich stark (asymmetrisch) belastet werden.

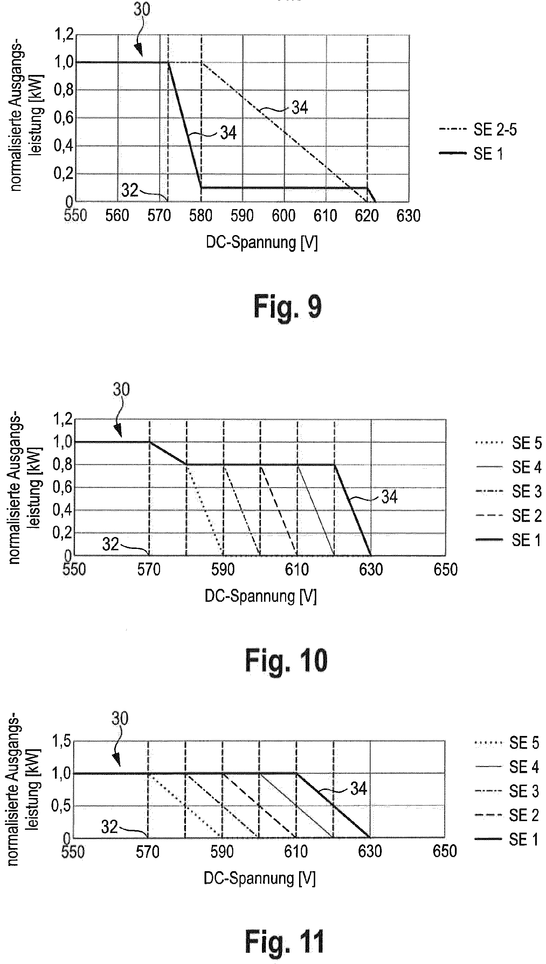

Fig. 9 zeigt ein weiteres Leistungsdiagramm von fünf parallel geschalteten Stromversorgungseinheiten (SE1 und SE 2-5), welche in einer erfindungsgemäßen DC-Schaltungsanordnung 100a, 100a' angeordnet sind. Die normalisierte Ausgangsleistung der parallel geschalteten Stromversorgungseinheiten in Abhängigkeit der an der Last 20 anliegenden DC-Spannung wird durch Leistungscharakteristiken 30 beschrieben.

Wie in Fig. 9 zu sehen ist, wird die Ausgangsleistung einer ersten Stromversorgungseinheit (SE 1) durch eine Leistungscharakteristik 30 beschrieben, welche sich von der Leistungscharakteristik unterscheidet, welche die Ausgangsleistung der anderen vier parallel geschalteten Stromversorgungseinheiten (SE 2-5) beschreibt. Zudem weist die Ausgangsleistung der ersten Stromversorgungseinheit SE 1 bereits bei einem DC-Spannungswert knapp oberhalb von 570 V einen Leistungsabfall 34a auf. Die Ausgangsleistung der anderen vier parallel geschalteten Stromversorgungseinheiten SE 2-5 nimmt wiederum erst ab einem DC-Spannungswert von 580 V durch einen unterschiedlichen Leistungsabfall 34 ab.

Bei der ersten Stromversorgungseinheit SE 1 wird es sich durch die Ausprägung der Leistungscharakteristik erwartungsgemäß um das am häufigsten belastete Gerät handeln. Dieses am stärksten belastete Gerät kann gezielt mit einer höheren Lebensdauer spezifiziert und gebaut werden. Beispielhaft können hier andere Kondensatoren verwendet werden. Durch die Modifikation der einzelnen Stromversorgungseinheiten kann also die Gesamtlebensdauer des Systems erhöht werden. Wenn zudem die Ausgangsleistung der am stärksten beanspruchten Stromversorgungseinheit SE 1 wie in Fig. 7 gezeigt geregelt wird, kann die am häufigsten belastete Stromversorgungseinheit beispielsweise nur die Grundlast decken. Diese Grundlast kann, je nach System, deutlich geringer als die benötigte Spitzenlast und auch die durchschnittliche Last je Stromversorgungseinheit sein. Entsprechend kann die Stromversorgungseinheit mit erhöhter Lebensdauer für eine kleinere Leistung ausgelegt werden, wodurch wiederum die Systemkosten sinken. Eine weitere Variante, welche nicht in Fig. 7 gezeigt ist, ist zudem, dass eine Stromversorgungseinheit zwar die Grundlast bereitstellt, allerdings nur bei sehr großen Lasten vollständig ausgelastet wird. Hiermit wird die Teillasteffizienz erhöht, gleichzeitig aber die Lebensdauer der Grundlaststromversorgungseinheit geschont, da diese nur sehr selten hohe Leistungen bereitstellen muss.

Fig. 10 zeigt ein weiteres Leistungsdiagramm von fünf parallel geschalteten Stromversorgungseinheiten, welche in einer erfindungsgemäßen DC-Schaltungsanordnung 100a, 100a' angeordnet sind. Wie in Fig. 10 zu sehen ist, können alle Leistungscharakteristiken 30 der unterschiedlichen parallel geschalteten Stromversorgungseinheiten SE 1-5 mehrere Schwellenwerte 32 enthalten, zwischen denen die Leistungscharakteristiken 30 unterschiedlich stark abfallen. Je nach Lebensdauer- und Effizienzverlauf ist es sinnvoll, die Leistungscharakteristiken 30 mit mehreren Abfallbereichen mit unterschiedlich starkem Leistungsabfall 34 zu versehen. So kann z.B. das erste Leistungsplateau (550 V-570 V), bei dem die Ausgangsleistung aller parallel geschalteten Stromversorgungseinheiten konstant ist, bei der Leistung mit dem maximalen Wirkungsgrad gewählt werden. Dieser Punkt liegt häufig zwischen 70 % und 90 % der maximalen Ausgangsleistung der jeweiligen Stromversorgungseinheit. Damit wird der Effizienzverlauf hin zu größeren Systemleistungen verbessert.

Anders als in Fig. 10 gezeigt ist, können die Schwellenwerte 32 der einzelnen Leistungscharakteristiken 30 auch derart gewählt werden, dass die einzelnen Leistungscharakteristiken 30 in Richtung der Ordinate überlappen. Dies ist in Fig. 11 gezeigt und ermöglicht es, den Übergang zwischen zwei Leistungscharakteristiken 30 möglichst stetig zu gestalten und zudem gegen Messtoleranzen immun zu sein.

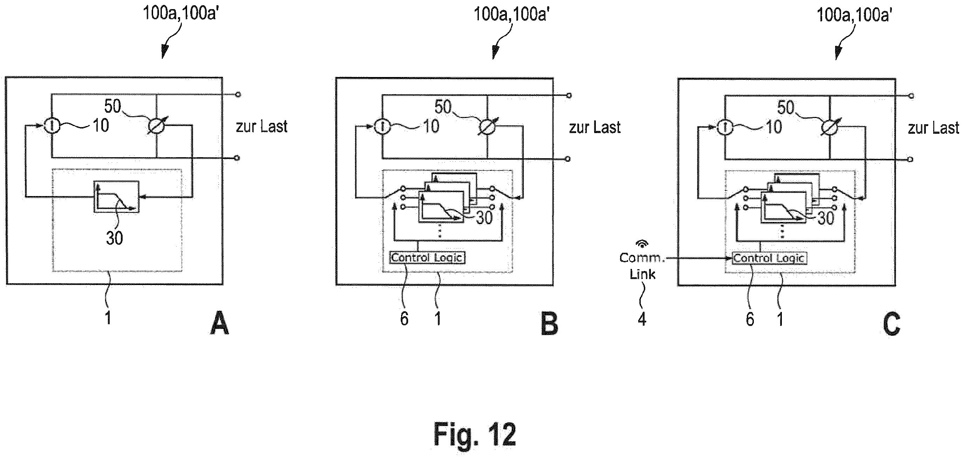

Fig. 12 zeigt schematische Darstellungen weiterer erfindungsgemäßer DC-Schaltungsanordnungen 100a, 100a'. Im Gegensatz zu den in den Fig. 3-6 gezeigten Schaltungsanordnungen ist in Fig. 12 nur eine DC-Stromversorgungseinheit 10 gezeigt. Es versteht sich, dass schlicht aus Visualisierungszwecken auf eine Darstellung der Parallelschaltung von zwei oder mehr Stromversorgungseinheiten 10 verzichtet wurde.

Fig. 12A stellt eine erste Ausgestaltung dar, bei der für jede Stromversorgungseinheit 10 eine feste Leistungscharakteristik 30 vorbestimmt ist. Diese Leistungscharakteristik 30 kann entweder bereits ab Werk vorprogrammiert sein oder über Wahlschalter an der jeweiligen Stromversorgungseinheit 10 (nicht gezeigt) ausgewählt werden. Fig. 12A zeigt somit eine vergleichsweise einfache Ausgestaltung der vorliegenden Erfindung.

Die Ausgangsleistung einer Stromversorgungseinheit 10 kann durch die Vorrichtung 1 allerdings auch durch mehrere vordefinierte Leistungscharakteristiken 30 geregelt werden. Die Möglichkeit mehrerer Leistungscharakteristiken pro Stromversorgungseinheit 10 ist in Fig. 12B gezeigt. Neben den mehreren vorgespeicherten bzw. vordefinierten Abfallcharakteristiken 30 bedarf es in dieser Ausgestaltung zudem einer entsprechenden Steuerlogik 6 ("Control Logik"), die geeignet ist, zwischen den mehreren vordefinierten Abfallcharakteristiken 30 für jeweils eine Stromversorgungseinheit 10 zu wechseln. Sowohl die gespeicherten Abfallcharakteristiken 30 als auch die Steuerlogik 6 können beispielsweise auf einem gemeinsamen Microcontroller implementiert werden. Die Steuerlogik entscheidet auf Grund von internen Parametern, wie beispielsweise der Temperatur der jeweiligen Stromversorgungseinheit 10, der anliegenden Spannung, der durchschnittlichen Belastung und/oder dem Alter der jeweiligen Stromversorgungseinheit, darüber, welche Leistungscharakteristik 30 für die jeweilige Stromversorgungseinheit 10 auszuwählen ist. Alternativ oder ergänzend kann für den Wechsel zwischen den Leistungscharakteristiken auch ein vorgegebener Zeitzyklus verwendet werden.

Ein optimierter Betrieb der Vorrichtung 1 und der gesamten Schaltungsanordnung 100a ist ferner mit einer zusätzlichen Kommunikation möglich, wie es in Fig. 12C zu sehen ist. Hierfür ist an der Vorrichtung 1 ein Eingang 4 zum Empfangen von Leistungscharakteristiken 30 und/oder einem oder mehreren äußeren Parametern vorgesehen. Bei den äußeren Parametern handelt es sich beispielsweise um die Anzahl der Stromversorgungseinheiten, Produktionsdaten, Lastdaten, Wetterdaten oder dergleichen. Die Vorrichtung ist ferner ausgestaltet, basierend auf den empfangenen Leistungscharakteristiken und/oder den empfangenen äußeren Parametern die Ausgangsleistung einer jeweiligen Stromversorgungseinheit 10 anzupassen. So ist es beispielweise möglich, dass bei einer erhöhten Umgebungstemperatur die Leistungscharakteristik 30 einer Stromversorgungseinheit 10 getauscht oder angepasst wird.

Insgesamt werden durch die erfindungsgemäße Vorrichtung, die erfindungsgemäße Schaltungsanordnung und das erfindungsgemäße Verfahren die Effizienz des Gesamtsystems und die Lebensdauer der einzelnen parallelgeschalteten Stromversorgungseinheiten erhöht. Dies wird insbesondere auch dadurch erreicht, dass die Leistungscharakteristiken der Stromversorgungseinheiten unterschiedlich sind. Dies kann auf verschiedene Art und Weise erreicht werden, wie oben anhand einiger Beispiel bereits beschrieben wurde. Ferner sind folgende Ausgestaltungen denkbar:
- die Leistungscharakteristiken können zeitlich veränderbar sein;
- die Leistungscharakteristik kann für einen zeitlich begrenzten Zeitraum ausgesetzt werden;
- die Leistungscharakteristik eines oder mehrerer Geräte kann für einen zeitlich begrenzten Zeitraum verändert werden, wobei die Änderung so ausgestaltet werden kann, dass für einen begrenzten Zeitraum eine höhere Leistung bereit gestellt werden kann;
- nach einer Änderung kann eine Pausenzeit existieren, die variabel sein kann;
- die Zeiten können variabel von einem internen Parameter der Stromversorgung abhängig sein, wobei die internen Parameter unter anderem Eingangsspannung, Temperatur, Leistungsverlauf, Alterung, etc. sein können.

Es versteht sich, dass die gezeigten Ausführungsformen lediglich beispielhaft zu verstehen sind und dass weitere Variationen möglich sind ohne den Erfindungsgedanken zu verlassen. Die gezeigten Ausführungsformen sollen demnach nicht als schutzeinschränkend verstanden werden.

## Patentansprüche

1. Vorrichtung (1) zum Regeln der Ausgangsleistung von mindestens zwei parallel geschalteten Stromversorgungseinheiten (10) zur Stromversorgung einer Last (20),
wobei die Vorrichtung (1) ausgestaltet ist, die Ausgangsleistung einer jeweiligen Stromversorgungseinheit (10) in Abhängigkeit eines Lastparameters der Last (20) und basierend auf einer Leistungscharakteristik (30), welche die Ausgangsleistung der jeweiligen Stromversorgungseinheit (10) in Abhängigkeit des Lastparameters definiert, zu regeln,
wobei die Leistungscharakteristiken (30) der Stromversorgungseinheiten (10) unterschiedlich sind.

2. Vorrichtung (1) nach Anspruch 1,
wobei der Lastparameter eine an der Last (20) anliegende Spannung und/oder, im Fall einer an der Last anliegenden Wechselspannung, eine Frequenz der Wechselspannung ist.

3. Vorrichtung (1) nach einem der vorherigen Ansprüche,
wobei die Leistungscharakteristiken (30) der Stromversorgungseinheiten (10) bei Lastparameterwerten oberhalb eines Schwellenwerts (32) des Lastparameters abfallen und die Leistungscharakteristiken (30) der jeweiligen Stromversorgungseinheiten (10) sich durch einen unterschiedlichen Schwellenwert (32) voneinander unterscheiden.

4. Vorrichtung (1) nach einem der vorherigen Ansprüche,
wobei die Leistungscharakteristiken (30) der Stromversorgungseinheiten (10) bei Lastparameterwerten oberhalb eines Schwellenwerts (32) des Lastparameters abfallen und die Leistungscharakteristiken (32) der jeweiligen Stromversorgungseinheiten (10) sich durch einen unterschiedlich starken Leistungsabfall (34) voneinander unterscheiden.

5. Vorrichtung (1) nach Anspruch 3 oder 4,
wobei die Leistungscharakteristiken (30) bei Lastparameterwerten unterhalb des Schwellenwerts (32) des Lastparameters konstant sind.

6. Vorrichtung (1) nach einem der vorherigen Ansprüche,
wobei die Leistungscharakteristiken (30) der Stromversorgungseinheiten (10) mehrere Schwellenwerte (32) enthalten, zwischen denen die Leistungscharakteristiken (30) unterschiedlich stark abfallen.

7. Vorrichtung (1) nach einem der vorherigen Ansprüche,
wobei die Vorrichtung (1) ferner ausgestaltet ist, die Ausgangsleistung einer jeweiligen Stromversorgungseinheit (10) basierend auf einer von mehreren vordefinierten Leistungscharakteristiken (30) zu regeln.

8. Vorrichtung (1) nach Anspruch 7,
wobei die Vorrichtung (1) ferner ausgestaltet ist, die mehreren vordefinierten Leistungscharakteristiken (30) basierend auf einem oder mehreren internen Parametern der jeweiligen Stromversorgungseinheit (10) und/oder eines vorgegebenen Zeitzyklus für die Regelung auszuwählen.

9. Vorrichtung (1) nach Anspruch 8,
wobei die internen Parameter der jeweiligen Stromversorgungseinheit (10) Temperatur, anliegende Spannung, durchschnittliche Belastung und/oder Alter der jeweiligen Stromversorgungseinheit (10) sind.

10. Vorrichtung (1) nach einem der Ansprüche 7 bis 9,
wobei die Vorrichtung (1) ferner ausgestaltet ist, die mehreren vordefinierten Leistungscharakteristiken (30) einer jeweiligen Stromversorgungseinheit (10) basierend auf den internen Parametern der jeweiligen Stromversorgungseinheit (10) anzupassen.

11. Vorrichtung (1) nach einem der vorherigen Ansprüche,
ferner aufweisend einen Eingang (4), insbesondere eine drahtlose Kommunikationsschnittstelle, zum Empfangen von Leistungscharakteristiken (30) und/oder einem oder mehreren äußeren Parametern, wobei die Vorrichtung (1) ausgestaltet ist, die Ausgangsleistung einer jeweiligen Stromversorgungseinheit (10) basierend auf einer der empfangenen Leistungscharakteristiken (30) und/oder einem oder mehreren äußeren Parametern zu regeln, wobei die äußeren Parameter die Anzahl der Stromversorgungseinheiten, Lastdaten und/oder Wetterdaten sind.

12. Schaltungsanordnung (100a, 100a', 100b, 100b') mit mindestens zwei parallel geschalteten Stromversorgungseinheiten (10) zur Stromversorgung einer Last (20) und mit einer Vorrichtung (1) zum Regeln der Ausgangsleistung der mindestens zwei parallel geschalteten Stromversorgungseinheiten (10) nach einem der Ansprüche 1 bis 11.

13. Schaltungsanordnung (100a, 100a', 100b, 100b') nach Anspruch 12,
aufweisend
- eine Regelungsvorrichtung (1) pro Stromversorgungseinheit (10), wobei jede Regelungsvorrichtung zum Regeln der Ausgangsleistung der zugeordneten Stromversorgungseinheit (10) ausgestaltet ist, und/or - eine Spannungsmesseinheit (50) zum Messen einer an der Last (20) anliegenden Spannung und/oder eine Frequenzmesseinheit (60), insbesondere einen Phasenfrequenzdetektor, zum Bestimmen der Frequenz einer an der Last (20) anliegenden Wechselspannung.

14. Schaltungsanordnung (100a, 100a', 100b, 100b') nach Anspruch 12 oder 13, wobei in jeder parallel geschalteten Stromversorgungseinheit (10) eine oder mehrere vordefinierte Leistungscharakteristiken (30) eingespeichert sind, insbesondere Mittel vorgesehen sind zum Ändern der jeweiligen Leistungscharakteristiken.

15. Verfahren zum Regeln der Ausgangsleistung von mindestens zwei parallel geschalteten Stromversorgungseinheiten (10) zur Stromversorgung einer Last (20),
wobei das Verfahren ausgestaltet ist, die Ausgangsleistung einer jeweiligen Stromversorgungseinheit (10) in Abhängigkeit eines Lastparameters der Last (20) und basierend auf einer Leistungscharakteristik (30), welche die Ausgangsleistung der jeweiligen Stromversorgungseinheit (10) in Abhängigkeit des Lastparameters definiert, zu regeln,
wobei die Leistungscharakteristiken (30) der Stromversorgungseinheiten unterschiedlich sind.
